Europäisches Patentamt

European Patent Office

Office européen des brevets

(11) Publication number: 0 660 139 A1

# EUROPEAN PATENT APPLICATION

(21) Application number: 94120536.1

(22) Date of filing: 23.12.94

(51) Int. Cl.6: G02B 5/18

(30) Priority: 23.12.93 IT TO930988

(43) Date of publication of application:
28.06.95 Bulletin 95/26

(84) Designated Contracting States:
DE ES FR GB

(71) Applicant: CARELLO S.p.A.
Corso Unione Sovietica, 600
I-10135 Torino (IT)

(72) Inventor: Masuelli, Stefania
Via Nino Bixio, 22
I-10043 Orbassano (IT)
Inventor: Perlo, Piero
Via Chichignolo, 19
I-12048 Sommariva del Bosco (IT)

(74) Representative: Jorio, Paolo et al
Studio Torta,
Via Viotti, 9
I-10121 Torino (IT)

(54) Diffraction grating for generating a light beam with a predetermined light intensity distribution in an area subtending the beam.

(57) A diffraction grating for generating a light beam in a predetermined area (9) subtending the beam, and presenting at least one phase-modulation diffraction surface (1a) with a number of diffraction projections (2) so arranged as to form a multiorder diffraction grating for distributing the light in a number of diffraction orders greater than 40; the number of the diffraction orders and the contour and size of the diffraction projections of the grating being so combined that the light emitted by the grating impinges on the area (9) with a predetermined light intensity distribution and predetermined angles of divergence in two perpendicular directions.

Fig.1

The present invention relates to a diffraction grating for receiving light from a source and emitting a light beam in a predetermined area subtending the beam.

Diffraction means, in particular for light diffusers, are known, and are described for example in European Patent Application n. 479490, which relates to a light diffuser featuring a three-dimensional holographic optical element crossed by a light beam emitted by a source. Diffraction occurs as the beam crosses the element, which presents a certain thickness, thus modulating the refractive index; and suitable materials from which to form three-dimensional holographic means of the type described in the above patent application include gelatin impregnated with appropriate substances (dichromate), photosensitive polymerizable monomers, photographic emulsions, and many others.

Lighting devices, and particularly diffusers, produced as described in the above patent application present numerous drawbacks, foremost of which is the very narrow range within which the intensity and direction of the light emitted by the device can be controlled.

Moreover, manufacture of the three-dimensional holographic diffraction elements involves the use of high-cost, typically unstable material requiring a suitable supporting element.

It is an object of the present invention to provide a diffraction grating designed to overcome the aforementioned drawbacks, and which provides for achieving a predetermined, widely controllable distribution in space of the light beam emitted by the grating, is cheap and easy to produce, presents highly consistent physical, geometric and, hence, optical characteristics, and may also be used in applications for which known diffraction gratings of this type are unsuitable.

According to the present invention, there is provided a diffraction grating for receiving light from a source and emitting a light beam in a predetermined area subtending the beam; characterized in that it comprises at least one phase-modulation diffraction surface presenting a number of diffraction projections so arranged on said surface as to form a multiorder diffraction grating for distributing said light in a number of diffraction orders greater than 40; the number of said diffraction orders, and the contour and size of said diffraction projections of the grating being so combined that said light emitted by said grating and corresponding to the diffraction orders of said number is distributed with predetermined light intensities and predetermined angles of divergence in two perpendicular directions.

According to the present invention, there is also provided a procedure for producing a diffraction grating with the above characteristics, and in turn characterized in that it comprises establishing the number of diffraction orders of said grating and the contour of said diffraction projections, and defining the size of the projections by means of an iterative procedure for determining the minimum value of the function:

$$F = \sum_{i=-n}^{n} \left( I_i - I_{ip} \right)^2$$

which represents the sum of the squares of the differences between the light intensity $I_i$ emitted by the system and corresponding to diffraction order i, and the light intensity $I_{ip}$ of the same diffraction order; said sum extending between symmetrical values n and -n of the selected diffraction orders i.

The diffraction grating and relative procedure according to the present invention will now be described in more detail with reference to the accompanying drawings, in which:

Figure 1 shows a schematic section of the main optical elements of a lighting system featuring the diffraction grating according to the present invention;

Figures 2 and 3 show sections of two different diffraction gratings according to the invention, with respective binary and multilevel diffraction surface contours, and which may be used in both one- and two-dimensional diffraction structures;

Figure 4 shows a schematic, partially sectioned view in perspective of a two-dimensional binary diffraction element of the gratings according to the present invention;

Figure 5 shows the diffraction projection contour of a multiorder binary diffraction grating in the system according to the present invention;

Figure 6 shows the distribution, as a function of the various diffraction orders, of the light intensity emitted by the system according to the invention and using the Figure 5 grating;

Figure 7 shows a further multiorder binary grating of the system according to the invention;

Figure 8 shows the distribution, as a function of the various diffraction orders, of the light intensity emitted by the system using the Figure 7 grating;

Figure 9 shows a mask for fabricating a two-dimensional multiorder diffraction grating according to the present invention.

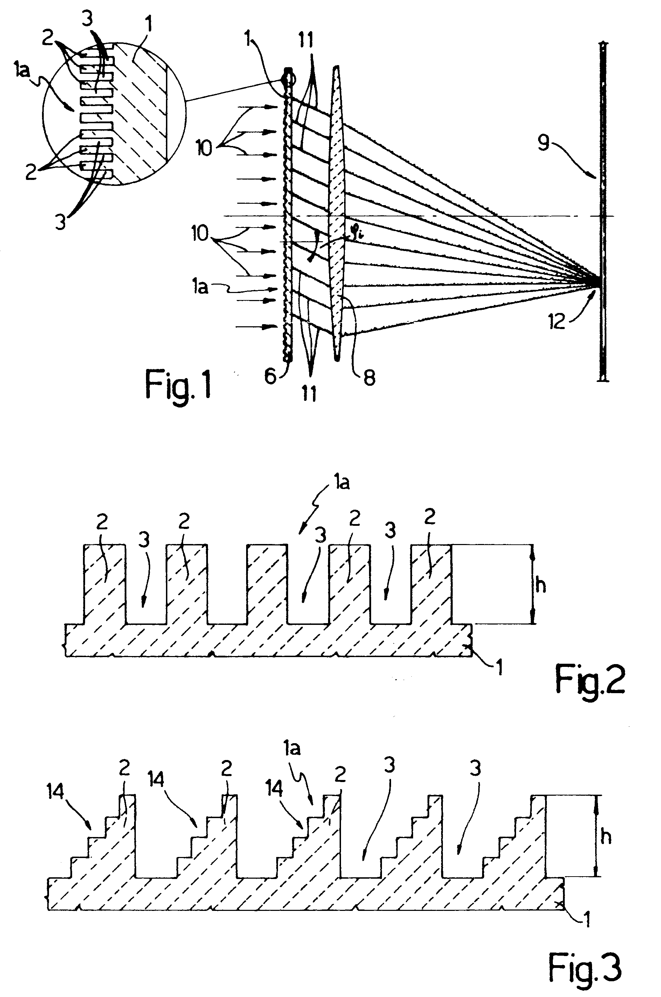

The diffraction grating according to the present invention may be used in an optical system of the type shown in Figure 1, which comprises a diffraction grating 1 presenting a phase-modulation diffraction surface 1a comprising, as is known, a number of diffraction projections 2 separated by longitudinal grooves 3. Projections 2 on surface 1a of the grating according to the present invention must be so arranged as to form a multiorder diffraction grating for distributing the light emitted by the grating in a number of diffraction orders greater than 40.

As explained in more detail later on, the above number of orders has been found to be that enabling fairly continuous distribution of the light intensity of the bean emitted by the grating, as required for the applications referred to later on.

Diffraction projections 2 forming part of diffraction surface 1a (Figure 1) may be formed directly on a supporting element 6 possibly consisting of a plate of transparent material, in which case projections 2 project directly from the surface defining one side of the plate; or they may be formed on a film of appropriate material fixed to supporting element 6.

As shown in Figure 1, the system may comprise a conventional refractive optical element 8 shaped, for example, to form a converging lens; or, instead of lens 8, the system may comprise phase-modulation diffraction means incorporated in grating 1 and which provide for focusing the light emitted by the grating.

In the latter case, phase-modulation surface 1a presents a first number of diffraction projections arranged in such a manner as to form a multiorder diffraction grating for distributing light in a number of diffraction orders greater than 40; and a further number of phase-modulation diffraction projections (not shown) for simply focusing the light in known manner. As such, overall diffraction by grating 1 includes distributing the light according to predetermined light intensities (as already state) and focusing the light in one or more predetermined points.

The Figure 1 system incorporating the grating according to the invention provides for emitting a light beam in a predetermined area 9 subtending the beam, and comprises a source (not shown) for emitting light 10; diffraction grating 1 being interposed between the source and area 9 as shown in Figure 1.

In a diffraction system of the type described, light 10 through diffraction surface 1a produces a diffracted light 11 distributed in a large number of diffraction orders: Figure 1 shows only light 11 corresponding to one diffraction order i, and issuing from surface 1a in a direction defined by angle $\phi_i$, which light 11 is focused by optical element 8 in a small portion 12 (Figure 1) of predetermined area 9. The overall diffracted light corresponding to the various diffraction orders issues from the system at an angle of divergence defined by diffraction grating 1.

According to the present invention, the number of diffraction orders (greater than 40) of grating 1, and the contour and size of diffraction projections 2 are so combined that the light emitted by the system impinges on area 9 with a predetermined light intensity distribution and predetermined angles of divergence in two perpendicular directions.

The combination of the above parameters (number of diffraction orders, contour and size of diffraction projections 2) is so selected that, even in the case of a purely binary diffraction grating, the luminous efficiency of the system - defined as the ratio between the energy of the light emitted by the grating and corresponding to the diffraction orders of said number, and the energy of light 10 emitted by the source - is greater than 0.78.

The present invention has shown that, using multiorder diffraction gratings with a number of diffraction orders greater than 40, and by appropriately combining the other parameters (contour and size of diffraction projections 2), it is possible to achieve in area 9 a predetermined light intensity distribution for meeting the requirements of any application. This is explained by the fact that, by appropriately selecting the parameters in the above combination, the light impinging on area 9 and corresponding to a large number of diffraction orders is capable of forming any desired light pattern on the area. In particular, it has been found that the intensity distribution of the light impinging on area 9 may be constant, linear or exponential.

Moreover, the light intensity distribution in area 9 is substantially independent of the distribution of both the intensity and phase of light 10 impinging on diffraction grating 1, which light intensity is affected solely by the angle of incidence of the light. The same favourable results are obtained with both mono- and polychromatic light.

As already stated, diffraction surface 1a of grating 1 is a phase-modulation type, and therefore comprises a number of diffraction projections with a contour, for example, as shown in Figures 2, 3 and 4. The height h of the projections ranges between the wave length of the light emitted by the source and a few tens of wave lengths of the light, so that, in the case for example of the light emitted by a vehicle headlight lamp, height h may range approximately between 1 and 100 micron.

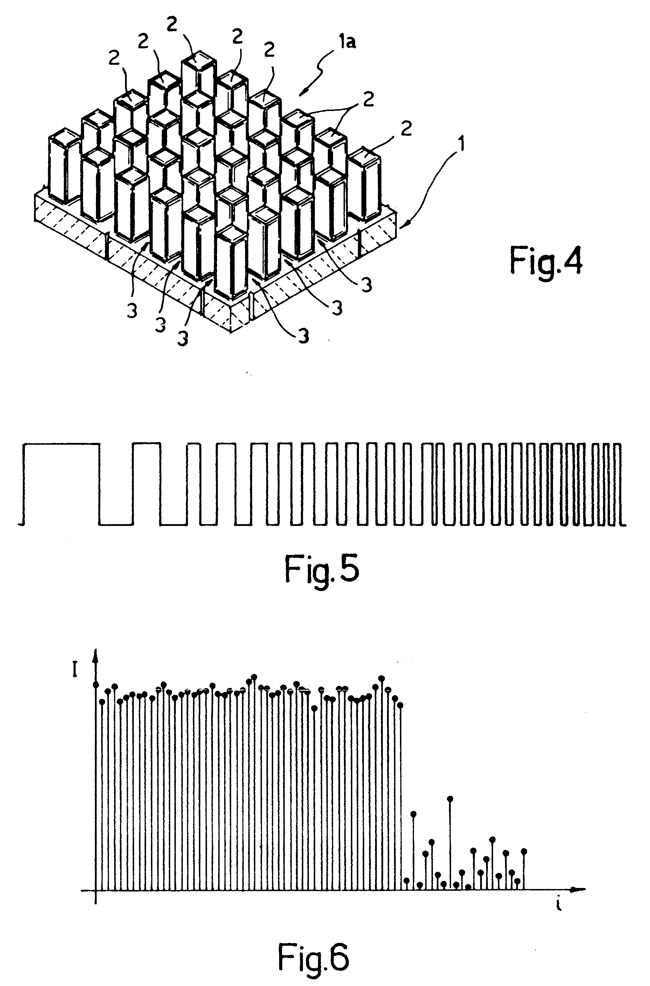

Diffraction surface 1a may be purely binary, as in Figures 2 and 4 showing sections of portions of grating 1, the surface 1a of which presents diffraction projections 2 extending perpendicularly from the surface and separated by grooves 3.

Alternatively, diffraction surface 1a may be what is known as a multilevel binary diffraction surface as shown in the Figure 3 section, i.e. wherein each projection 2, also extending perpendicularly from the surface, presents a step contour 14.

Though one-dimensional in Figures 2 and 3, the system according to the invention may feature two-dimensional diffraction surfaces 1a, i.e. wherein adjacent projections 2 are separated by grooves 3 in two perpendicular directions, as in Figure 4 which shows a view in perspective of a two-dimensional binary diffraction surface. Diffraction projections 2 may also be arranged symmetrically (Figure 3) or asymmetrically (Figure 5) on surface 1a.

The contours of the various types of projections described may be appropriately combined on diffraction surface 1a, and the system may comprise any other element or other refractive optical means.

The parameters (number of diffraction orders, contour and size of diffraction projections 2) defining diffraction surface 1a of grating 1 may be combined in any appropriate manner; and, as the purpose is to determine the combination/s enabling a predetermined light intensity distribution, various optimization methods may be employed, e.g. methods for achieving an increasingly higher degree of optimization by means of a number of successive operations.

Of these, the following procedure may be employed: firstly, the contour of the grating is defined, e.g. a contour as shown in Figure 2, presenting a number of rectangular-section projections 2 of constant height h; secondly, the number of diffraction orders of the multiorder grating of the system is defined, e.g. a grating with 101 diffraction orders; and, lastly, the size of diffraction projections 2 is defined by means of an iterative procedure to determine the minimum value of the function:

$$F = \sum_{i=-n}^{n} \left( I_i - I_{ip} \right)^2$$

The above function represents the sum of the squares of the differences between the light intensity $I_i$ emitted by the system and corresponding to diffraction order i, and the light intensity $I_{ip}$ of the same diffraction order; which sum extends between symmetrical values n and -n of the selected diffraction orders. The light intensity $I_i$ emitted by the system and corresponding to diffraction order i may be expressed as a function of a geometric coordinate (e.g. the spacing) of projections 2, so that the location of each projection in the grating is defined by the coordinate.

The procedure described may conveniently comprise a first step for analytically determining a first value of the above F function; which first value may be so selected as to differ by a predetermined amount from the minimum value of the F function, and so correspond to approximate dimensions of diffraction projections 2.

The procedure may also comprise a second step for determining, on the basis of the results in the first step, the minimum value of the F function corresponding to the final dimensions of diffraction projections 2; which second step is performed applying the gradient method.

The procedure described may also comprise a further step previous to the above two steps and wherein the dimensions of at least some of diffraction projections 2 are selected bearing in mind the dimensional limitations imposed by the construction requirements of the grating, which limitations may consist for example of the minimum dimensions of the projections required for constructing the grating using a given technique.

Though, as stated, the number of diffraction orders of the grating according to the invention must be greater than 40, gratings with any number of orders, e.g. a few thousand, may be produced using the procedure described. The construction of gratings with a very high number of diffraction orders may prove more complex than those with a low number.

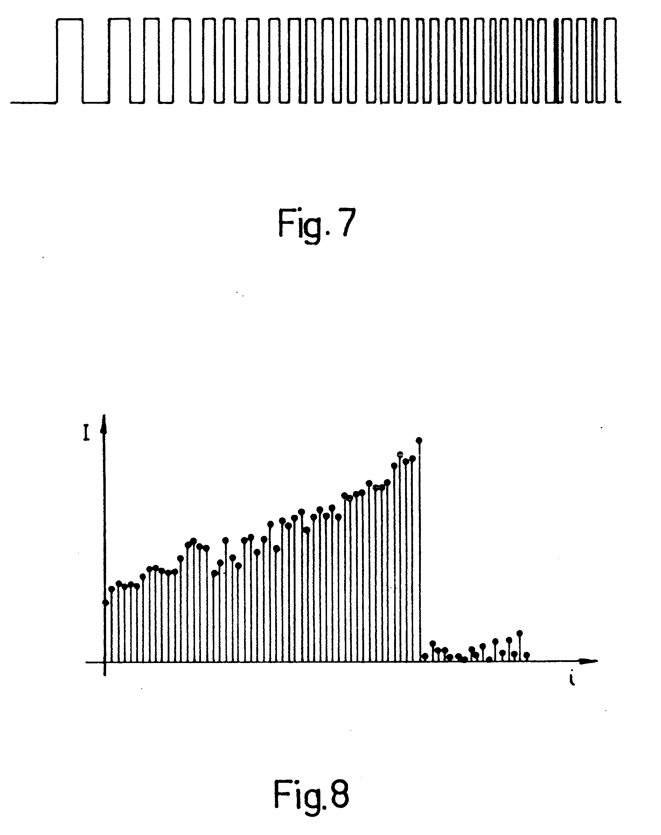

Two multiorder gratings with 101 diffraction orders and constructed using the procedure described are shown in Figures 5 and 7 (only half of the grating, which is symmetrical, is shown); and Figures 6 and 8 show the distribution of light intensity I using the system according to the invention and incorporating the gratings in Figures 5 and 7 respectively. As can be seen, the first provides for a substantially constant light intensity distribution over the entire area 9, and the second for a light intensity distribution varying linearly.

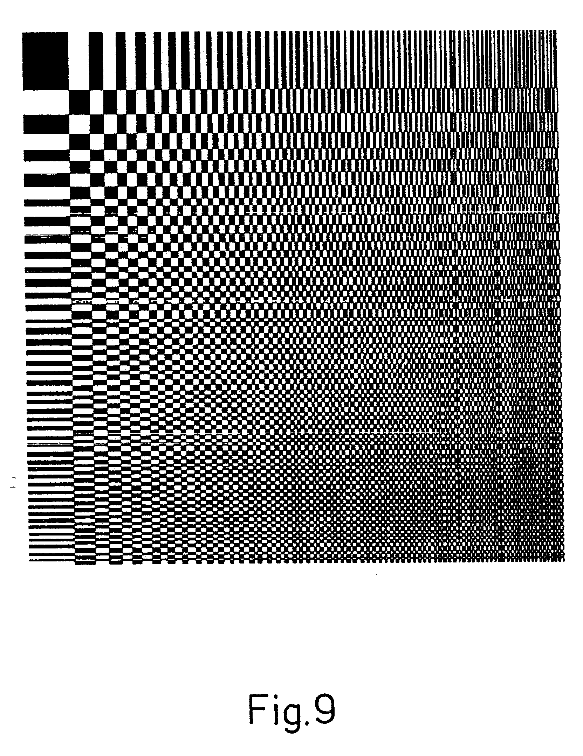

Figure 9 shows a plan view of a mask for preparing a two-dimensional multiorder binary grating, wherein the alternating light and dark areas correspond to grooves 3 and projections 2.

As already stated, the system according to the invention provides for extremely high luminous efficiency even with high diffraction order values. The attached Table 1 shows the luminous efficiency percentages (defined as stated) of the Figure 1 system using gratings with different diffraction orders up to 201. As can be seen, in each case, luminous efficiency is over 78%.

Table 1

| Number of diffraction orders | Luminous efficiency % |
|---|---|
| 7 | 81.2 |
| 9 | 78.2 |
| 11 | 84.3 |
| 15 | 84.6 |
| 19 | 82.5 |
| 25 | 80.3 |
| 31 | 82.4 |
| 41 | 81.7 |
| 51 | 80.9 |
| 61 | 80.4 |
| 71 | 79.9 |
| 81 | 80.2 |
| 91 | 81.3 |
| 101 | 81.2 |
| 151 | 82.1 |
| 201 | 80.4 |

By appropriately selecting the parameters defining diffraction surface 1a, and using appropriate additional optical means associated with it (e.g. one or more refractive elements such as lens 8 in Figure 1, or diffraction means comprising phase-modulation diffraction surfaces), it is possible to achieve a desired angle of divergence of the beam emitted by the system. In the case of a two-dimensional diffraction grating 1, it is possible to achieve predetermined angles of divergence in two perpendicular directions; or, in the case of a circularly symmetrical system, the beam may be contained within a predetermined solid angle.

The beam generated in area 9 by the system presents no undesired chromatic effects, by virtue of the light corresponding to an extremely large number of diffraction orders converging at each element of area 9.

The components of the lighting system according to the invention and of which the grating according to the invention forms part may be produced using known processes.

The diffraction grating according to the invention may conveniently be used for producing any type of vehicle lighting device, such as a headlight.

The lighting system according to the invention may form part of a diffuser, a display, a laser beam blender, a laser beam distribution transformer, a spatial coherence modulator, or other type of device.

Clearly, changes may be made to the diffraction grating and relative procedure as described and illustrated herein without, however, departing from the scope of the present invention.

## Claims

1. A diffraction grating for receiving light from a source and emitting a light beam in a predetermined area (9) subtending the beam; characterized in that it comprises at least one phase-modulation diffraction surface (1a) presenting a number of diffraction projections (2) so arranged on said surface as to form a multiorder diffraction grating for distributing said light in a number of diffraction orders greater than 40; the number of said diffraction orders, and the contour and size of said diffraction projections (2) of the

5

grating being so combined that said light emitted by said grating and corresponding to the diffraction orders of said number is distributed with predetermined light intensities and predetermined angles of divergence in two perpendicular directions.

2. A diffraction grating as claimed in Claim 1, characterized in that the number of said diffraction orders, and the contour and size of said diffraction projections (2) of said grating are so combined that the luminous efficiency of the system is greater than 0.78; the luminous efficiency of the system being defined as the ratio between the energy of said light emitted by said grating and corresponding to the diffraction orders of said number, and the energy of said light emitted by said source.

3. A diffraction grating as claimed in Claim 1, characterized in that said distribution of the intensity of the light emitted by said grating is constant.

4. A diffraction grating as claimed in Claim 1, characterized in that said distribution of the intensity of the light emitted by said grating is linear.

5. A diffraction grating as claimed in Claim 1, characterized in that said distribution of the intensity of the light emitted by said grating is exponential.

6. A diffraction grating as claimed in one of the foregoing Claims, characterized in that at least part of said diffraction surface (1a) is binary, wherein said diffraction projections (2) present the same height (h) of the order of the wave length of said light.

7. A diffraction grating as claimed in one of the foregoing Claims from 1 to 5, characterized in that at least part of said diffraction surface (1a) is a multilevel binary surface.

8. A diffraction grating as claimed in one of the foregoing Claims from 1 to 5, characterized in that said binary diffraction surface (1a) is two-dimensional.

9. A diffraction grating as claimed in one of the foregoing Claims, characterized in that said diffraction projections are arranged symmetrically on said diffraction surface.

10. A diffraction grating as claimed in one of the foregoing Claims from 1 to 8, characterized in that said diffraction projections are arranged asymmetrically on said diffraction surface.

11. A diffraction grating as claimed in one of the foregoing Claims, characterized in that said diffraction projections are formed on the surface of an optical element (8) forming part of the system.

12. Diffraction grating as claimed in one of the foregoing Claims from 1 to 10, characterized in that said diffraction projections are formed on the surface of a plastic film fixed to the surface of an optical element (8) of the system.

13. A diffraction grating as claimed in one of the foregoing Claims, characterized in that said phase-modulation diffraction surface (1a) presenting a number of diffraction projections so arranged on said surface as to form a multiorder diffraction grating for distributing said light in a number of diffraction orders greater than 40 presents a further number of phase-modulation diffraction projections for focusing said light, so that overall diffraction by the grating includes distribution of said light according to predetermined light intensities, and focusing said light in predetermined points.

14. A diffraction grating as claimed in one of the foregoing Claims, characterized in that it comprises associated refractive optical means.

15. A diffraction grating as claimed in one of the foregoing Claims and forming part of a vehicle lighting device.

16. A diffraction grating as claimed in one of the foregoing Claims and forming part of a display.

17. A diffraction grating as claimed in one of the foregoing Claims and forming part of a light diffuser.

18. A diffraction grating as claimed in one of the foregoing Claims and forming part of a laser beam or light beam blender.

19. A diffraction grating as claimed in one of the foregoing Claims and forming part of a laser beam or light beam distribution transformer.

20. A diffraction grating as claimed in one of the foregoing Claims and forming part of a spatial coherence modulator.

21. A procedure for producing a diffraction grating as claimed in one of the foregoing Claims, characterized in that it comprises establishing the number of diffraction orders of said grating and the contour of said diffraction projections, and defining the size of the projections by means of an iterative procedure for determining the minimum value of the function:

$$F = \sum_{i=-n}^{n} \left( I_i - I_{ip} \right)^2$$

which represents the sum of the squares of the differences between the light intensity $I_i$ emitted by the system and corresponding to diffraction order i, and the light intensity $I_{ip}$ of the same diffraction order; said sum extending between symmetrical values n and -n of the selected diffraction orders i.

22. A procedure as claimed in Claim 21, characterized in that the light intensity $I_i$ emitted by the system and forming part of said function is expressed as a function of a geometric coordinate of said projections, so that the location of each projection in the grating is defined by said geometric coordinate.

23. A procedure as claimed in Claim 21 or 22, characterized in that it comprises a first step for analytically determining a first value of said function corresponding to approximate dimensions of said diffraction projections, and which value differs from said minimum value by a predetermined amount; and a second step for determining said minimum value corresponding to the final dimensions of said diffraction projections; said second step being performed applying the gradient method.

24. A procedure as claimed in one of the foregoing Claims from 21 to 23, characterized in that it comprises a further step, previous to said first and second steps, whereby the dimensions of at least some of said diffraction projections are selected bearing in mind the dimensional limitations imposed by the construction requirements of said grating.

Fig.1

Fig.2

Fig.3

Fig.4

Fig.5

Fig.6

Fig. 7

Fig. 8

Fig.9

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | JOURNAL OF PHYSICS D. APPLIED PHYSICS, vol.21, no.10S, 14 October 1988, LETCHWORTH GB pages S102 - S105 J. TURUNEN ET AL. 'Optimisation and fabrication of grating beamsplitters' * paragraph 1-3 * | 1-10,13, 19,21-24 | G02B5/18 |
| X | OPTICS LETTERS., vol.17, no.13, 1 July 1992, NEW YORK US pages 908 - 910 P. EHBETS ET AL. 'High-efficiency conbtinuous surface-relief gratings for two-dimensional array generation' * the whole document * | 1-10, 21-24 | |
| D,A | EP-A-0 479 490 (PHYSICAL OPTICS CORP.) 8 April 1992 * page 4, line 1 - page 5, line 4; figures 1-5 * | 1,21 | |
| A | APPLIED OPTICS., vol.31, no.22, 1 August 1992, NEW YORK US pages 4459 - 4470 E. N. GLYTSIS ET AL. 'High-spatial-frequency binary and multilevel stairstep gratings: polarization-selective mirrors and broadband antireflection surfaces' * paragraph 1 * | 1-10, 21-24 | TECHNICAL FIELDS SEARCHED (Int.Cl.6) G02B |
| A | DE-A-42 15 584 (ROBERT BOSCH GMBH) 18 November 1993 * page 2, line 52 - line 65 * | 1,15,21 | |

The present search report has been drawn up for all claims

| Place of search | Date of completion of the search | Examiner |
|---|---|---|
| THE HAGUE | 15 March 1995 | Sarneel, A |

EPO FORM 1503 03.82 (P04C01)